# EUROPEAN PATENT APPLICATION

(11) **EP 4 468 510 A1**
(43) Date of publication of application: **27.11.2024**
(21) Application number: 23843394.0
(22) Date of filing: 19.07.2023
(51) Int. Cl.: H01M 50/59, H01M 50/469, H01M 50/213, H01M 50/489

(54) **ELECTRODE ASSEMBLY STRUCTURE, AND CYLINDRICAL BATTERY, BATTERY PACK AND VEHICLE COMPRISING SAME**

(30) Priority: 19.07.2022 KR 20220089220
(71) Applicant: LG Energy Solution, Ltd., Seoul 07335 (KR)
(72) Inventor: KIM, Jee-Eun, Daejeon 34122 (KR)
(74) Representative: Goddar, Heinz J.
(86) International application number: PCT/KR2023/010446
(87) International publication number: WO 2024/019548

(57) **Abstract**

The present disclosure discloses an electrode assembly structure that facilitates impregnation of electrolyte and discharge of gas, and reduces the risk of fire due to short circuit. The electrode assembly structure according to one aspect of the present disclosure includes a first electrode assembly wound around a winding axis, and a second electrode assembly wound around the winding axis, adjacent to the first electrode assembly, and located outer than the first electrode assembly in a radial direction.

## Description

### TECHNICAL FIELD

The present disclosure relates to an electrode assembly structure, and a cylindrical battery, a battery pack, and a vehicle including the same. More specifically, the present disclosure relates to an electrode assembly structure that facilitates impregnation of electrolyte and discharge of gas, and reduces the risk of fire due to short circuit, and a cylindrical battery and a battery pack including the same.

The present application claims priority to Korean Patent Application No. 10-2022-0089220 filed on July 19, 2022 in the Republic of Korea, the disclosures of which are incorporated herein by reference.

### BACKGROUND ART

In a cylindrical battery, in order to maximize current collection efficiency, an electrode assembly in which a positive electrode tab and a negative electrode tab extend up and down along the height direction of the battery can, respectively, may be applied. In a cylindrical battery to which an electrode assembly having this structure is applied, a current collector may be used as an intermediate medium to connect the positive electrode tab and the negative electrode tab to the cell terminal and the battery can, respectively.

In this case, for example, the positive electrode current collector may be combined with the positive electrode tab while covering one side of the electrode assembly, and the negative electrode current collector may be combined with the negative electrode tab while covering the other side of the electrode assembly. Additionally, the positive electrode current collector may be electrically connected to the cell terminal, and the negative electrode current collector may be electrically connected to the battery can.

However, according to the conventional cylindrical battery having this structure, current is concentrated on the strip-shaped electrode tab connected to the positive electrode uncoated portion and/or the negative electrode uncoated portion, so resistance is high, a lot of heat is generated, and current collection efficiency is not good.

For small cylindrical batteries with form factors of 1865 or 2170, resistance and heat generation are not a major issue. However, when the form factor is increased to apply the cylindrical battery to an electric vehicle, a problem may occur where the cylindrical battery ignites as a lot of heat is generated around the electrode tab during the rapid charging process. In addition, as the form factor increases, the diameter of the electrode assembly increases, resulting in a problem of inferior impregnability as the electrolyte cannot move to the center or outermost area of the electrode assembly when electrolyte is injected, compared to the existing cylindrical battery with a small form factor.

In addition, when cylindrical batteries with an increased form factor are exposed to a high temperature environment for a long time, the separator shrinks, causing a short circuit between electrodes, and the increased form factor also increases the risk of fire.

In the cylindrical battery having the structure described above, it became necessary to develop a cylindrical battery with a new structure that could solve the above problems.

### DISCLOSURE

### Technical Problem

The present disclosure is designed to solve the problems of the related art, and therefore the present disclosure is directed to facilitating impregnation of electrolyte and discharge of gas, and reducing the risk of fire due to short circuit.

However, the technical problem to be solved by the present disclosure is not limited to the above-mentioned problem, and other problems not mentioned will be clearly understood by those skilled in the art from the present disclosure described below.

### Technical Solution

An electrode assembly structure according to an embodiment of the present disclosure may comprise a first electrode assembly wound around a winding axis, and a second electrode assembly wound around the winding axis, adjacent to the first electrode assembly, and located outer than the first electrode assembly in a radial direction, which is defined as a direction away from the winding axis,
wherein in each of the first electrode assembly and the second electrode assembly, a stack including a first electrode having a first uncoated portion not coated with an active material layer along a winding direction, a second electrode having a second uncoated portion not coated with an active material layer along the winding direction, and a separator interposed therebetween may be wound around the common winding axis to form a core and an outer circumference.

At least a part of the uncoated portion of the first electrode assembly and at least a part of the uncoated portion of the second electrode assembly may include a plurality of segments divided along the winding direction.

The first electrode assembly may have no segment in an area corresponding to the part where the core is formed when wound.

The second electrode assembly may have no segment in an area corresponding to the part where the outer circumference is formed when wound.

The second electrode assembly may be located further outward in the radial direction than the first electrode assembly.

The uncoated portion of the first electrode assembly and the uncoated portion of the second electrode assembly may be bent in the radial direction or in a direction opposite to the radial direction.

The uncoated portion of the first electrode assembly and the uncoated portion of the second electrode assembly may be bent in opposite directions.

The uncoated portion of the first electrode assembly is bent in a direction opposite to the radial direction.

The uncoated portion of the second electrode assembly may be bent in the radial direction.

The electrode assembly structure may further comprise a separating member located between the first electrode assembly and the second electrode assembly.

The separating member may be configured to have an empty space formed between the outer circumference of the first electrode assembly and the inner circumference of the second electrode assembly.

The separating member may have a discontinuous shape along a circumferential direction of the outer circumference of the first electrode assembly.

The separating member may contain a material with electrical insulating properties.

The separating member may contain a thermal conductive material.

A cylindrical battery according to an embodiment of the present disclosure may comprise the electrode assembly structure according to the present disclosure; a battery housing having an opening formed on one side to accommodate the electrode assembly structure through the opening and electrically connected to the first electrode; a top cap configured to cover the opening; a terminal configured to protrude out of the battery housing through a closed portion located opposite to the opening and electrically connected to the second electrode; and a first current collector located on one side of the electrode assembly structure and configured to electrically connect the electrode assembly structure and the battery housing.

The first current collector may include a first tab coupling portion coupled to the first uncoated portion of each of the first electrode assembly and the second electrode assembly; and a housing coupling portion coupled to the battery housing.

A battery pack according to the present disclosure may comprise the cylindrical battery according to the present disclosure.

A vehicle according to the present disclosure may comprise the battery pack according to the present disclosure.

### Advantageous Effects

According to one aspect of the present disclosure, if the electrode assembly is exposed to high temperature for a long time and the separator shrinks to cause a short circuit between electrodes, since the electrode assembly structure is composed of a plurality of electrode assemblies, short-circuit current may be reduced, compared to the case where one electrode assembly is provided. This is because the short-circuit current is not generated by a short circuit that can occur in an electrode assembly configured entirely as one assembly, but generated by a short circuit that can occur in each of a plurality of electrode assemblies. Therefore, the risk of fire due to short circuit can be reduced.

The electrode assembly structure may facilitate electrolyte impregnation and gas discharge. This is because the movement of electrolyte and gas can be facilitated through the space formed between the first electrode assembly and the second electrode assembly. In particular, the movement of the electrode assembly structure in the height direction can be smooth through the space provided in a direction parallel to the winding axis.

The electrode assembly structure can be easily produced. In particular, when the form factor increases, there is a high possibility of production defects, such as misalignment, as the stack containing electrodes and separators is wound several times to form one electrode assembly. However, when producing and combining a plurality of smaller electrode assemblies, the possibility of production defects can be reduced because the number of windings is reduced.

According to another aspect of the present disclosure, bending of the uncoated portion is facilitated by forming a segment. In addition, by combining the current collector on the surface formed by overlapping bent segments into several folds rather than separate tabs, it is easy to combine the electrode assembly structure and the current collector, and the area through which the current can move is expanded, thereby reducing resistance.

According to still another aspect of the present disclosure, even if electrolyte or gas moves into the space formed between the first electrode assembly and the second electrode assembly, it does not affect the uncoated portion, and thus may reduce the possibility of a short circuit between the electrodes due to tearing of the uncoated portion or the separator.

According to still another aspect of the present disclosure, the separating member may prevent clearance from occurring in the space between the first electrode assembly and the second electrode assembly. In addition to preventing clearance, the separating member may be configured to have an empty space formed between the outer circumference of the first electrode assembly and the inner circumference of the second electrode assembly to facilitate the movement of electrolyte and gas.

### DESCRIPTION OF DRAWINGS

FIG. 1 is a drawing showing an electrode assembly structure according to the present disclosure.
FIG. 2 is a drawing showing a cross section of the electrode assembly structure according to the present disclosure.
FIG. 3 is a drawing showing a stack according to the present disclosure.
FIG. 4 is a drawing showing an electrode structure of a first electrode assembly included in the electrode assembly structure according to the present disclosure.
FIG. 5 is a drawing showing an electrode structure of a second electrode assembly included in the electrode assembly structure according to the present disclosure.
FIG. 6 is a diagram showing the process of coupling the electrode assembly structure according to the present disclosure.
FIG. 7 is a drawing showing the first electrode assembly included in the electrode assembly structure according to the present disclosure.
FIG. 8 is a drawing showing the second electrode assembly included in the electrode assembly structure according to the present disclosure.
FIG. 9 is a drawing showing the electrode assembly structure according to the present disclosure.
FIG. 10 is a diagram showing the process of coupling separating members included in the electrode assembly structure according to the present disclosure.
FIG. 11 is a drawing showing a cylindrical battery according to the present disclosure.
FIG. 12 is a drawing showing a battery pack according to the present disclosure.
FIG. 13 is a drawing showing a vehicle according to the present disclosure.

### BEST MODE

Hereinafter, preferred embodiments of the present disclosure will be described in detail with reference to the accompanying drawings. The accompanying drawings illustrate a preferred embodiment of the present disclosure and together with the foregoing disclosure, serve to provide further understanding of the technical features of the present disclosure, and thus, the present disclosure is not construed as being limited to the drawings. Like reference numerals refer to like elements. Additionally, in the drawings, the thickness, proportions and dimensions of components are exaggerated for effective explanation of technical content.

It should be understood that the terms used in the specification and the appended claims should not be construed as limited to general and dictionary meanings, but interpreted based on the meanings and concepts corresponding to technical aspects of the present disclosure on the basis of the principle that the inventor is allowed to define terms appropriately for the best explanation.

In this specification, terms indicating directions such as up, down, left, right, front, and back are used, but it is obvious to those skilled in the art of the present disclosure that these terms are only for convenience of explanation and they may vary depending on the location of the target object or the location of the observer.

Accordingly, the embodiments described in this specification and the configurations shown in the drawings are only one of the most preferred embodiments of the present disclosure and do not represent all technical details of the present disclosure, so it should be understood that there may be various equivalents and variations that can be replaced at the time of filing this application.

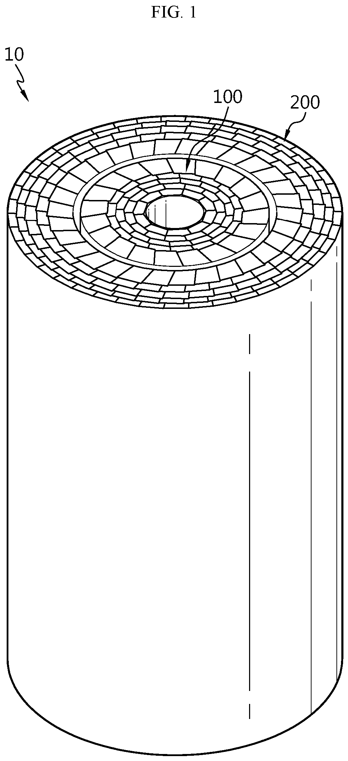

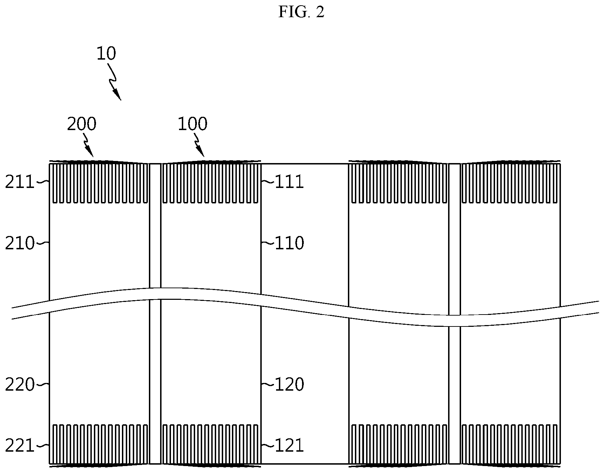

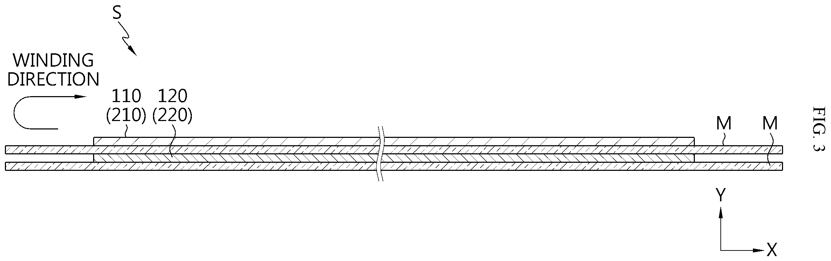

FIG. 1 is a drawing showing an electrode assembly structure 10 according to the present disclosure. FIG. 2 is a drawing showing a cross section of the electrode assembly structure 10 according to the present disclosure. FIG. 3 is a drawing showing a stack S according to the present disclosure.

Referring to FIGS. 1 to 3, the electrode assembly structure 10 according to the present disclosure may include a first electrode assembly 100 and a second electrode assembly 200.

The first electrode assembly 100 and the second electrode assembly 200 may be wound around a common winding axis. The first electrode assembly 100 and the second electrode assembly 200 may be adj acent to each other. The second electrode assembly 200 is adjacent to the first electrode assembly 100 and may be located outer than the first electrode assembly 100 in a radial direction, which is defined as a direction away from the winding axis.

The first electrode assembly 100 may be located closer to the winding axis than the second electrode assembly 200. The second electrode assembly 200 may be located further outward than the first electrode assembly 100 in a radial direction.

There may be a clearance between the first electrode assembly 100 and the second electrode assembly 200. However, the first electrode assembly 100 and the second electrode assembly 200 may be attached without any clearance.

The outer diameter of the first electrode assembly 100 and the inner diameter of the second electrode assembly 200 may be approximately the same. The outer circumference of the first electrode assembly 100 and the inner circumference of the second electrode assembly 200 may face each other.

However, the first electrode assembly 100 and the second electrode assembly 200 represent electrode assemblies, which are included in the electrode assembly structure 10 and adjacent to each other, and the electrode assembly structure 10 is not limited to including only the first electrode assembly 100 and the second electrode assembly 200. That is, electrode assembly structure 10 may include two or more electrode assemblies.

In the first electrode assembly 100, the stack S, which includes the first electrode 110 having a first uncoated portion 111 not coated with an active material layer along the winding direction, the second electrode 120 having a second uncoated portion 121 not coated with an active material layer along the winding direction, and a separator M interposed between them, may be wound around a common winding axis to form a core and an outer circumference.

In the second electrode assembly 200, the stack S, which includes the first electrode 210 having a first uncoated portion 211 not coated with an active material layer along the winding direction, the second electrode 220 having a second uncoated portion 221 not coated with an active material layer along the winding direction, and a separator M interposed between them, may be wound around a common winding axis to form a core and an outer circumference.

According to this configuration of the present disclosure, for example, in the case where the electrode assembly is exposed to high temperature for a long time so that the separator shrinks and a short circuit occurs between the electrodes, since the electrode assembly structure 10 includes a plurality of electrode assemblies 100, 200, the short-circuit current may be reduced compared to the case where the electrode assembly structure is entirely configured with a single electrode assembly. This is because the short-circuit current is not generated by a short circuit that can occur in an electrode assembly configured entirely as one assembly, but generated by a short circuit that can occur in each of a plurality of electrode assemblies. Therefore, the risk of fire due to short circuit can be reduced.

The electrode assembly structure 10 may facilitate electrolyte impregnation and gas discharge. This is because the movement of electrolyte and gas can be facilitated through the space formed between the first electrode assembly 100 and the second electrode assembly 200. In particular, the movement of the electrode assembly structure 10 in the height direction can be smooth through the space provided in a direction parallel to the winding axis.

The electrode assembly structure 10 can be easily produced. In particular, when the form factor increases, there is a high possibility of production defects, such as misalignment, as the stack containing electrodes and separators is wound several times to form one electrode assembly. However, when producing and combining a plurality of smaller electrode assemblies, the possibility of production defects can be reduced because the number of windings is reduced.

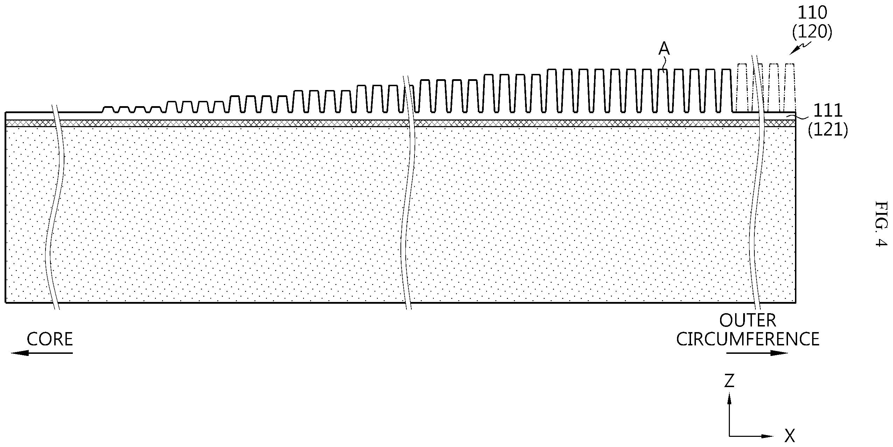

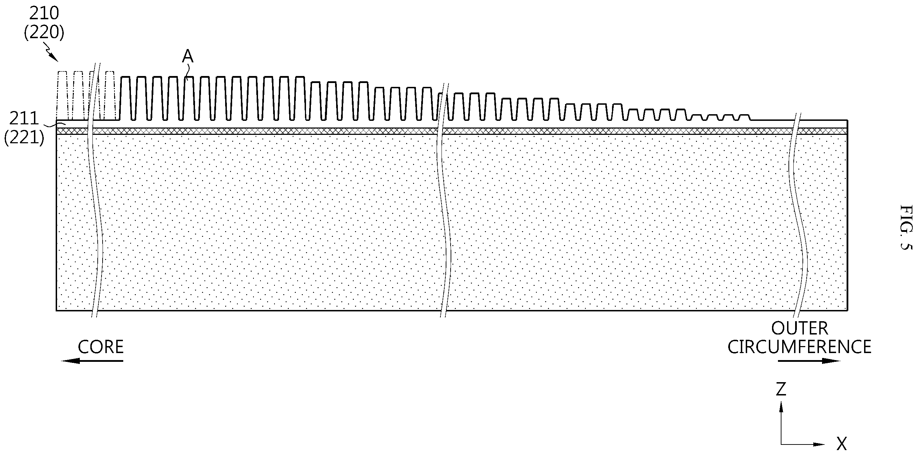

FIG. 4 is a drawing showing a structure of electrodes 110, 120 of a first electrode assembly 100 included in the electrode assembly structure 10 according to the present disclosure. FIG. 5 is a drawing showing a structure of electrodes 210, 220 of a second electrode assembly 200 included in the electrode assembly structure 10 according to the present disclosure.

Referring again to FIGS. 4 and 5, at least a part of the uncoated portion 111, 121 of the first electrode assembly may include a plurality of segments A divided along the winding direction. At least a part of the uncoated portion 211, 221 of the second electrode assembly may include a plurality of segments A divided along the winding direction.

The segment A may be processed by notching. The segment A may be trapezoidal in shape. However, the segment A may be transformed into a square, parallelogram, semicircle, or semi-elliptic shape.

The height of the segment A of the uncoated portion 111, 121 of the first electrode assembly may gradually increase from the core to the outer circumference along the winding direction. The uncoated portion 111, 121 of the first electrode assembly may not form a segment A in the area corresponding to the portion where the core is formed when wound.

The height of the segment A of the uncoated portion 211, 221 of the second electrode assembly may gradually decrease from the core to the outer circumference side along the winding direction. The uncoated portion 211, 221 of the second electrode assembly may not form a segment A in the area corresponding to the portion where the outer circumference is formed when wound.

The segment A may be bent in the radial direction or in a direction opposite to the radial direction. The segment A may be overlapped into several layers by the bending. The first current collector 20 and/or the second current collector 60, which will be described later, may be coupled in an area where the plurality of segments A overlap in multiple layers.

According to this structure of the present disclosure, bending of the uncoated portion is easy by forming the segment A. In addition, by coupling the current collector on the surface formed by overlapping several layers of the bent segments A rather than a separate tab, it is easy to combine the electrode assembly structure 10 and the current collector, and the area through which the current can move is expanded, thereby reducing resistance.

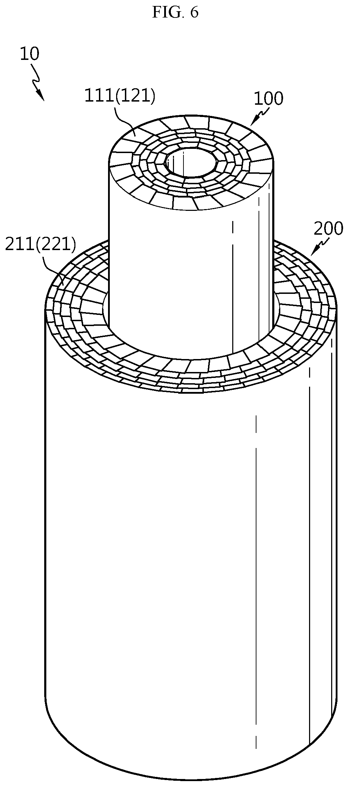

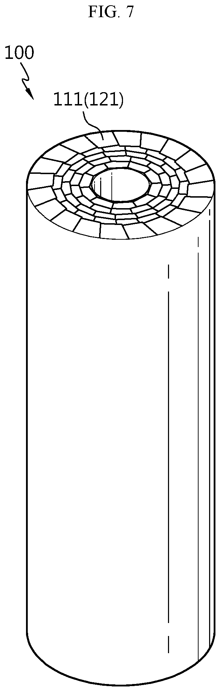

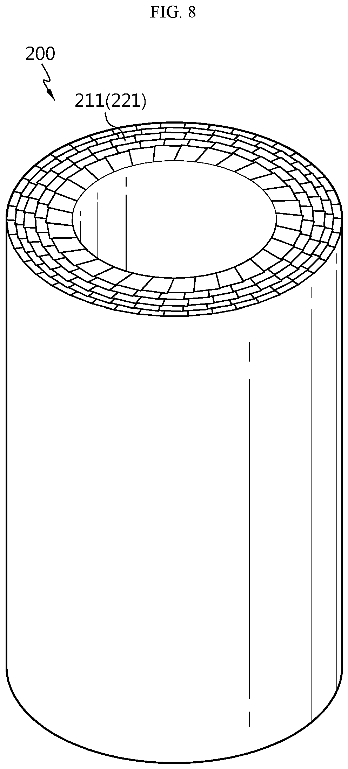

FIG. 6 is a diagram showing the process of coupling the electrode assembly structure 10 according to the present disclosure. FIG. 7 is a drawing showing the first electrode assembly 100 included in the electrode assembly structure 10 according to the present disclosure. FIG. 8 is a drawing showing the second electrode assembly 200 included in the electrode assembly structure 10 according to the present disclosure.

Referring to FIGS. 6 to 8, the uncoated portion 111, 121 of the first electrode assembly may be bent in the radial direction or in a direction opposite to the radial direction. The uncoated portion 211, 221 of the second electrode assembly may be bent in the radial direction or in a direction opposite to the radial direction.

The uncoated portion 111, 121 of the first electrode assembly and the uncoated portion 211, 221 of the second electrode assembly may be bent in opposite directions. For example, as shown in FIGS. 6 to 8, the uncoated portion 111, 121 of the first electrode assembly may be bent in a direction opposite to the radial direction, and the uncoated portion 211, 221 of the second electrode assembly may be bent in the radial direction.

According to this structure in the present disclosure, the hole formed in the core of the first electrode assembly 100 is not closed by the bent uncoated portion 111, 121. The uncoated portion 211, 221 bent to the outer circumference of the second electrode assembly 200 do not protrude. Additionally, the space formed between the first electrode assembly 100 and the second electrode assembly 200 is also not closed by the bent uncoated portions 111, 121, 211, 221. This is because the uncoated portion 111, 121 of the first electrode assembly is bent in a direction opposite to the radial direction, and the uncoated portion 211, 221 of the second electrode assembly is bent in the radial direction. Therefore, even if electrolyte or gas moves into the space formed between the first electrode assembly 100 and the second electrode assembly 200, it does not affect the uncoated portion, thereby reducing the possibility of a short circuit between the electrodes due to tearing of the uncoated portion or the separator.

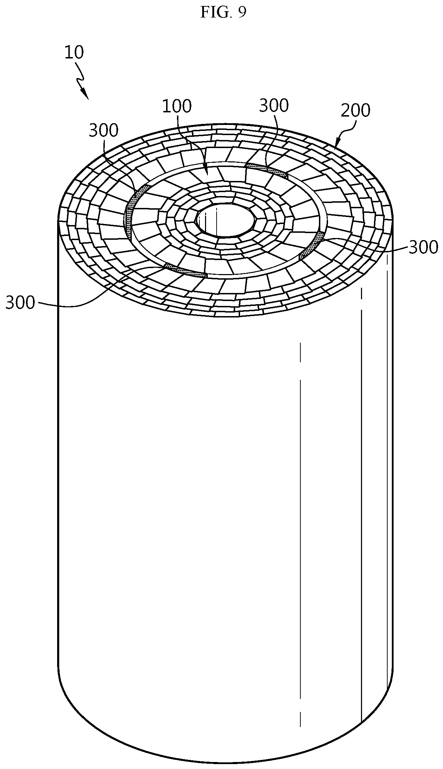

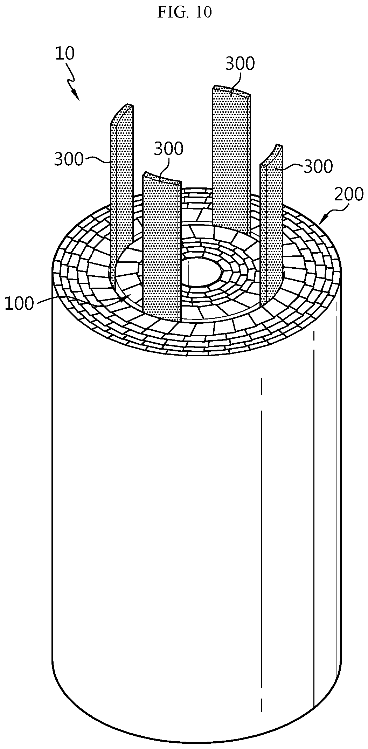

FIG. 9 is a drawing showing the electrode assembly structure 10 according to the present disclosure. FIG. 10 is a diagram showing the process of coupling separating members 300 included in the electrode assembly structure 10 according to the present disclosure.

Referring to FIGS. 9 and 10, the electrode assembly structure 10 may include a separating member 300.

The separating member 300 may be located between the first electrode assembly 100 and the second electrode assembly 200. The separating member 300 may be configured to have an empty space formed between the outer circumference of the first electrode assembly 100 and the inner circumference of the second electrode assembly 200. The separating member 300 may have a discontinuous shape along the circumferential direction of the outer circumference of the first electrode assembly 100. For example, the separating member 300 may include four members provided at radial intervals of 90 degrees on the outer circumference of the first electrode assembly 100. Each of the four members has a constant width along the outer circumference of the first electrode assembly 100 and a thickness corresponding to the gap between the outer circumference of the first electrode assembly 100 and the inner circumference of the second electrode assembly 200, and may have an extended form along in the height direction of the electrode assembly structure 10.

The separating member 300 may contain a material having electrical insulation properties. The separating member 300 may contain a thermal conductive material.

According to this structure of the present disclosure, it is possible to prevent clearance from occurring in the space between the first electrode assembly 100 and the second electrode assembly 200 through the separating member 300. In addition to preventing clearance, the separating member 300 may be configured to have an empty space formed between the outer circumference of the first electrode assembly 100 and the inner circumference of the second electrode assembly 200 to facilitate the movement of electrolyte and gas.

The separating member 300 may contain a thermal conductive material, so if heat or fire occurs in the electrode assembly structure 10, the heat may be discharged through the separating member.

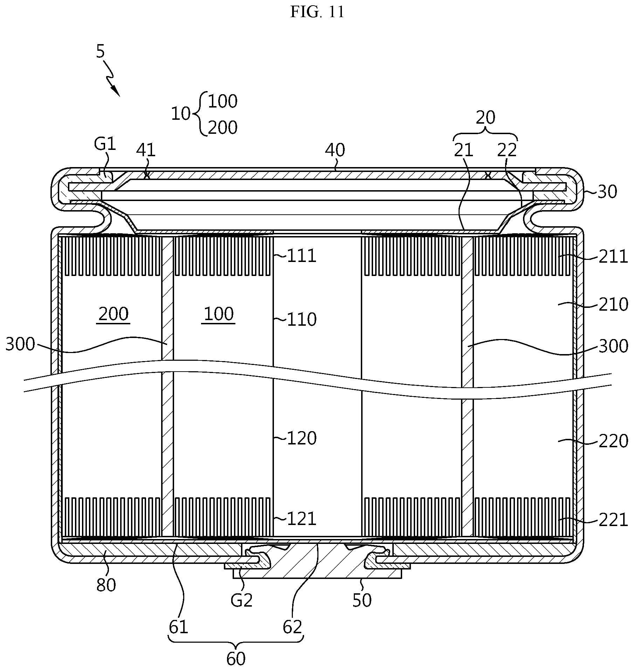

FIG. 11 is a drawing showing a cylindrical battery 5 according to the present disclosure.

Referring to FIG. 11, the cylindrical battery 5 according to the present disclosure may include a battery housing 30, a top cap 40, a terminal 50, and a first current collector 20.

The battery housing 30 may accommodate the electrode assembly structure 10 through an opening formed on one side. The battery housing 30 is a roughly cylindrical receptor with an opening formed on one side, and may be made of a conductive metal material. The battery housing 30 may be electrically connected to the first electrode 110, 210. The battery housing 30 can be used as an external terminal. The battery housing 30 may also accommodate electrolyte through the opening. However, the battery housing 30 in the present disclosure is not limited to this form.

Top cap 40 may be configured to cover the opening. The top cap 40 may be configured to have no polarity. The top cap 40 may be made of metal to ensure rigidity, but even in this case, it may not have polarity. The top cap 40 may contain an insulating material. However, the present disclosure does not limit the top cap 40 as not having polarity, and the top cap 40 may have the same polarity as the battery housing 30.

The top cap 40 may be provided with a venting portion 41. The venting portion 41 may be configured to be weak compared to the surrounding area. If the pressure inside the battery increases, the venting portion 41 may rupture to release gas. The venting portion 41 may be formed by partially reducing the thickness of the top cap 40 by notching on one or both sides of the top cap 40.

The terminal 50 may protrude out of the battery housing 30 through a closed portion located opposite to the opening. The terminal 50 may be electrically connected to the second electrode 120, 220. The terminal 50 may penetrate approximately the center of the lower surface of the battery housing 30. The terminal 50 may be electrically connected to the electrode assembly structure 10 by combining with the second current collector 60, which will be described later.

The first current collector 20 may be located on one side of the electrode assembly structure 10. The first current collector 20 may be electrically connected to the first electrode 110, 210. The first current collector 20 may electrically connect the electrode assembly structure 10 and the battery housing 30.

The first current collector 20 may include a first tab coupling portion 21 and a housing coupling portion 22. The first tab coupling portion 21 may be coupled to the uncoated portion 111 of the first electrode assembly and the uncoated portion 211 of the second electrode assembly. The first tab coupling portion 21 may be located on the separating member 300. For example, the first tab coupling portion 21 may extend from a support portion located on one side of the first electrode assembly 100 to one side of the second electrode assembly 200 and may be positioned on the separating member 300. The housing coupling portion 22 may be coupled to the battery housing 30. The housing coupling portion 22 may be coupled to the inner surface of the battery housing 30.

According to this structure in the present disclosure, since the first tab coupling portion 21 of the first current collector is located on the separating member 300, when the first tab coupling portion 21 is coupled to the uncoated portion 111 of the first electrode assembly and the uncoated portion 211 of the second electrode assembly, the first tab coupling portion 21 may be stably supported by the separating member 300.

Referring back to FIG. 11, the cylindrical battery 5 according to the present disclosure may include a second current collector 60 and/or an insulator 80 and/or a first gasket G1 and/or a second gasket G2.

The second current collector 60 may be electrically coupled to the second electrode 120, 220. The second current collector 60 may be electrically coupled to the terminal 50. The second current collector 60 may include a terminal coupling portion 61 coupled to the terminal 50 and a second tab coupling portion 62 coupled to the second electrode 120, 220.

The insulator 80 may be located between the electrode assembly structure 10 and the battery housing 30 to insulate the battery housing 30 and the second electrode 120, 220. The insulator 80 may be interposed between the closed portion of the battery housing 30 and the second current collector 60. The insulator 80 may include, for example, a resin material with insulating properties. The insulator 80 may have a hole approximately in the center so that the terminal 50 may be electrically connected to the second current collector 60.

The first gasket G1 may be provided between the top cap 40 and the battery housing 30. The first gasket G1 prevents the top cap 40 and the battery housing 30 from contacting each other.

The second gasket G2 may be provided between the terminal 50 and the battery housing 30. The second gasket G2 prevents the terminal 50 and the battery housing 30 from contacting each other.

The first gasket G1 and the second gasket G2 may be made of a resin material with insulating properties and elasticity.

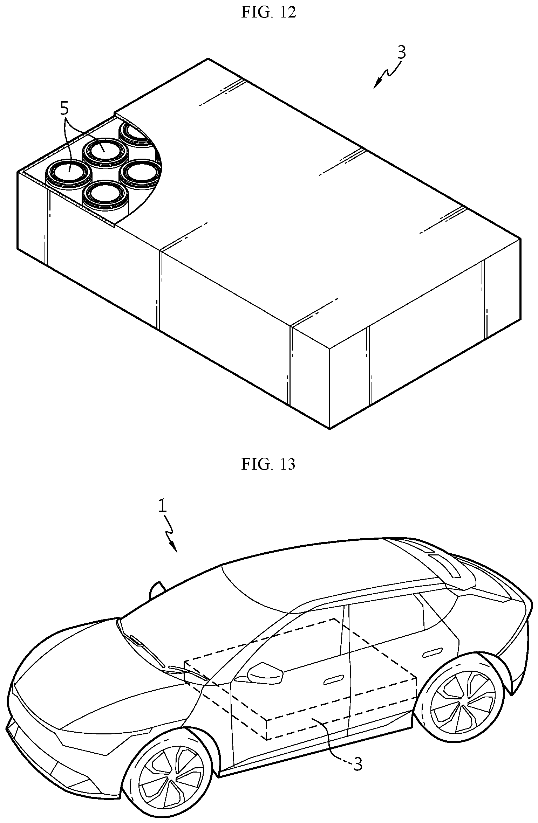

FIG. 12 is a diagram showing a battery pack 3 according to the present disclosure.

Referring to FIG. 12, the battery pack 3 according to the present disclosure may include the cylindrical battery 5. The battery pack 3 may further include various components of the battery pack other than the cylindrical battery 5, such as BMS, busbar, pack case, relay, current sensor, etc. known at the time of filing the present disclosure.

FIG. 13 is a drawing showing a vehicle 1 according to the present disclosure.

Referring to FIG. 13, the vehicle 1 according to the present disclosure may include the battery pack 3. The vehicle 1 may be a hybrid vehicle or an electric vehicle. The vehicle 1 according to the present disclosure further includes various other components included in the vehicle in addition to the battery pack 3. For example, the vehicle 1 according to the present disclosure may further include a vehicle body, a motor, and control devices such as an ECU (electronic control unit) in addition to the battery pack 3 according to the present disclosure.

As described above, the present disclosure has been described with a focus on preferred embodiments with reference to the accompanying drawings, but it is clear to those skilled in the art that many various obvious modifications can be made from this description without departing from the scope of the present disclosure. Accordingly, the scope of the present disclosure should be construed in terms of the appended claims to include such many modified examples.

### [Reference numerals]

1 vehicle
3 battery pack
5 cylindrical battery
10 electrode assembly structure
100 first electrode assembly
110 first electrode
111 first uncoated portion
120 second electrode
121 second uncoated portion
200 second electrode assembly
210 first electrode
211 first uncoated portion
220 second electrode
221 second uncoated portion
300 separating member
20 first current collector
21 first tab coupling portion
22 housing coupling portion
30 battery housing
40 top cap
41 venting portion
50 terminal
60 second current collector
61 tab coupling portion
62 terminal coupling portion
80 insulator
G1 first gasket
G2 second gasket
M separator
A segment

## Claims

1. An electrode assembly structure, comprising a first electrode assembly wound around a winding axis, and a second electrode assembly wound around the winding axis, adjacent to the first electrode assembly, and located outer than the first electrode assembly in a radial direction, which is defined as a direction away from the winding axis,
wherein in each of the first electrode assembly and the second electrode assembly, a stack including a first electrode having a first uncoated portion not coated with an active material layer along a winding direction, a second electrode having a second uncoated portion not coated with an active material layer along the winding direction, and a separator interposed therebetween is wound around the common winding axis to form a core and an outer circumference.

2. The electrode assembly structure according to claim 1, wherein at least a part of the uncoated portion of the first electrode assembly and at least a part of the uncoated portion of the second electrode assembly include a plurality of segments divided along the winding direction.

3. The electrode assembly structure according to claim 2, wherein the first electrode assembly has no segment in an area corresponding to the part where the core is formed when wound, and
wherein the second electrode assembly has no segment in an area corresponding to the part where the outer circumference is formed when wound.

4. The electrode assembly structure according to claim 1, wherein the uncoated portion of the first electrode assembly and the uncoated portion of the second electrode assembly are bent in the radial direction or in a direction opposite to the radial direction.

5. The electrode assembly structure according to claim 1, wherein the uncoated portion of the first electrode assembly and the uncoated portion of the second electrode assembly are bent in opposite directions.

6. The electrode assembly structure according to claim 1, wherein the uncoated portion of the first electrode assembly is bent in a direction opposite to the radial direction, and
wherein the uncoated portion of the second electrode assembly is bent in the radial direction.

7. The electrode assembly structure according to claim 1, further comprising a separating member located between the first electrode assembly and the second electrode assembly.

8. The electrode assembly structure according to claim 7, wherein the separating member is configured to have an empty space formed between the outer circumference of the first electrode assembly and the inner circumference of the second electrode assembly.

9. The electrode assembly structure according to claim 7, wherein the separating member has a discontinuous shape along a circumferential direction of the outer circumference of the first electrode assembly.

10. The electrode assembly structure according to claim 7, wherein the separating member contains a material with electrical insulating properties.

11. The electrode assembly structure according to claim 7, wherein the separating member contains a thermal conductive material.

12. A cylindrical battery, comprising:
the electrode assembly structure according to any one of claims 1 to 11;
a battery housing having an opening formed on one side to accommodate the electrode assembly structure through the opening and electrically connected to the first electrode;
a top cap configured to cover the opening;
a terminal configured to protrude out of the battery housing through a closed portion located opposite to the opening and electrically connected to the second electrode; and
a first current collector located on one side of the electrode assembly structure and configured to electrically connect the electrode assembly structure and the battery housing.

13. The cylindrical battery according to claim 12, wherein the first current collector includes:
a first tab coupling portion coupled to the first uncoated portion of each of the first electrode assembly and the second electrode assembly; and
a housing coupling portion coupled to the battery housing.

14. A battery pack, comprising the cylindrical battery according to claim 12 or 13.

15. A vehicle, comprising the battery pack according to claim 14.
